Europäisches Patentamt

European Patent Office

Office européen des brevets

(11) Numéro de publication: **0 048 236**

**A1**

# (12) DEMANDE DE BREVET EUROPEEN

(21) Numéro de dépôt: **81870036.1**

(22) Date de dépôt: **15.09.81**

(51) Int. Cl.³: **F 16 B 12/24**
**F 16 B 12/46**

(30) Priorité: **16.09.80 BE 202111**

(43) Date de publication de la demande:
**24.03.82 Bulletin 82/12**

(84) Etats contractants désignés:
**AT BE CH DE FR GB IT LI LU NL SE**

(71) Demandeur: **Le Clercq, Geneviève, épouse Jourdain**
**Rue des Crêches 85**
**B-5622 Profondville(BE)**

(72) Inventeur: **Le Clercq, Geneviève, épouse Jourdain**
**Rue des Crêches 85**
**B-5622 Profondville(BE)**

(74) Mandataire: **Plucker, Guy et al,**
**OFFICE KIRKPATRICK 4 Square de Meeûs**
**B-1040 Bruxelles(BE)**

(54) Dispositif d'assemblage en angle démontable.

(57) Un premier élément d'assemblage (1) peut être engagé dans un logement prévu à cet effet dans chacune des deux traverses (3 et 4) de manière à déterminer la position relative des traverses, un second élément d'assemblage (2) peut être disposé à l'intérieur de l'angle formé par les deux traverses (3 et 4) et présente des moyens pour maintenir ces traverses dans la position déterminée par le premier élément d'assemblage (1).

Ce dispositif d'assemblage trouve son application notamment dans l'ébénisterie.

Fig.1.

EP 0 048 236 A1

Croydon Printing Company Ltd.

La présente invention a pour objet un dispositif d'assemblage en angle démontable. Elle trouvera notamment son application dans le domaine de l'ébénisterie et de la menuiserie, ces applications n'étant pas limitatives.

Actuellement, les procédés les plus classiques pour assembler deux pièces en angle sont le collage et le vissage.

Le principal inconvénient du collage est sa lourdeur de mise en oeuvre. En effet, pour qu'un collage soit efficace, il est généralement nécessaire de comprimer deux pièces l'une sur l'autre, au moyen d'une presse ou de serre-joints. Un autre handicap est le temps de séchage qui peut être relativement long. Enfin, le collage est une opération irréversible, ne permettant plus de démontage ultérieur.

Quant au vissage, il présente l'inconvénient d'être inesthétique. De plus, pour que l'assemblage ait une certaine rigidité, il y a lieu généralement de multiplier le nombre de vis, ce qui augmente le temps de montage.

Plusieurs systèmes d'assemblage démontable sont également connus. On connaît notamment un système d'assemblage utilisé principalement pour la réalisation d'étagères ou autres meubles démontables, dans lequel des traverses biseautées comportant des rainures verticales sur leur face externe sont assemblées à l'aide d'une cornière verticale dont les deux ailes sont munies de rebords à angle droit dirigés vers l'intérieur. Ces rebords s'engagent dans les rainures verticales des traverses biseautées pour constituer l'assemblage en angle. Un tel système d'assemblage présente notamment l'inconvénient d'être coûteux et inesthétique. En effet, les cornières d'assemblage verticales sont apparentes aux quatre coins du meuble et sur toute la hauteur de celui-ci. Le fait que ce système d'assemblage nécessite l'utilisation de cornières s'étendant sur toute la hauteur du meuble ne permet notamment pas de réaliser un meuble occupant tout l'espace disponible entre un plancher et un plafond.

La présente invention a pour but de réaliser un dispositif d'assemblage en angle de deux traverses préalablement biseautées et rainurées, permettant un montage et un démontage extrêmement simples et rapides et ne nécessitant aucun outillage.

Un autre but de l'invention est de réaliser un dispositif d'assemblage en angle de deux traverses, qui peut comporter en outre un montant perpendiculaire aux deux traverses.

Un autre but de l'invention est de réaliser un dispositif d'assemblage en angle de deux traverses qui soit invisible de l'extérieur.

La présente invention a pour objet un dispositif d'assemblage en angle de deux traverses biseautées en bout, comprenant un premier élément d'assemblage pouvant être engagé dans un logement prévu à cet effet dans chacune des deux traverses à réunir, de manière à déterminer la position relative de ces traverses juxtaposées par leur face biseautée, et un second élément d'assemblage pouvant être disposé à l'intérieur de l'angle formé par les deux traverses et présentant des moyens pour maintenir ces traverses dans la position déterminée par le dit premier élément d'assemblage.

Suivant une forme de réalisation avantageuse, le premier élément d'assemblage est constitué d'une équerre et le dit second élément d'assemblage est constitué d'une bande dont les extrémités rabattues viennent se loger dans une rainure prévue à cet effet dans chacune des traverses à réunir.

Suivant un mode d'exécution préféré, cette extrémité rabattue de la dite bande qui constitue le second élément d'assemblage, est disposée suivant un plan sécant par rapport au plan formé par l'aile de l'équerre logée dans la même traverse.

Suivant une forme d'exécution particulière de l'invention, la dite bande est pliée en forme d'équerre de manière à épouser l'angle intérieur formé par les traverses à réunir.

Le dispositif d'assemblage suivant l'invention peut avantageusement comporter, en outre, une nervure reliant, entre eux, les deux éléments d'assemblage constituant le dispositif d'assemblage, de manière à ce que ce dernier ne forme qu'une seule pièce.

Le dispositif d'assemblage suivant l'invention peut également comporter une semelle sur laquelle sont rapportés les différents éléments d'assemblage qui le constituent.

Suivant une forme d'exécution avantageuse de l'invention, le dit premier élément d'assemblage fait saillie perpendiculairement au plan formé par les deux traverses à réunir et est apte à recevoir un montant muni d'une mortaise s'emboîtant sur la partie saillante de l'élément d'assemblage.

Suivant une autre forme d'exécution de l'invention, le dispositif d'assemblage comporte, en outre, une clavette verticale dont une des extrémités est logée dans une des traverses de l'assemblage, l'autre extrémité venant se loger dans l'extrémité d'un montant dont la position est ainsi fixée par rapport aux deux traverses réunies.

L'invention a également pour objet un meuble démontable assemblé à l'aide de dispositifs d'assemblage tels que décrits ci-dessus.

D'autres caractéristiques et avantages de l'invention ressortiront de la description qui va suivre de diverses formes particulières de sa réalisation, référence étant faite aux dessins annexés, dans lesquels :

la Fig. 1 est une vue en plan illustrant le principe de base du dispositif d'assemblage suivant l'invention;

la Fig. 2 représente une variante d'exécution de la Fig. 1;

la Fig. 3 représente une autre variante d'exécution de la Fig. 1;

la Fig. 4 est une vue en perspective montrant un mode de réalisation avantageux du dispositif d'assemblage suivant l'invention;

la Fig. 5 est une vue en perspective montrant un dispositif d'assemblage particulier permettant, en outre, l'emboîtement d'un montant;

la Fig. 6 est une vue en perspective illustrant une variante d'exécution du système d'assemblage représenté à la Fig. 5;

la Fig. 7 donne un exemple de réalisation d'un meuble assemblé à l'aide de dispositifs d'assemblage suivant l'invention;

la Fig. 8 représente la section transversale d'une traverse frontale du meuble représenté à la Fig. 7;

la Fig. 9 montre la section transversale des traverses latérales et dorsales du meuble représenté à la Fig. 7;

la Fig. 10 montre la section transversale du montant frontal du meuble représenté à la Fig. 7, et

la Fig. 11 montre la section transversale du montant dorsal du meuble représenté à la Fig. 7.

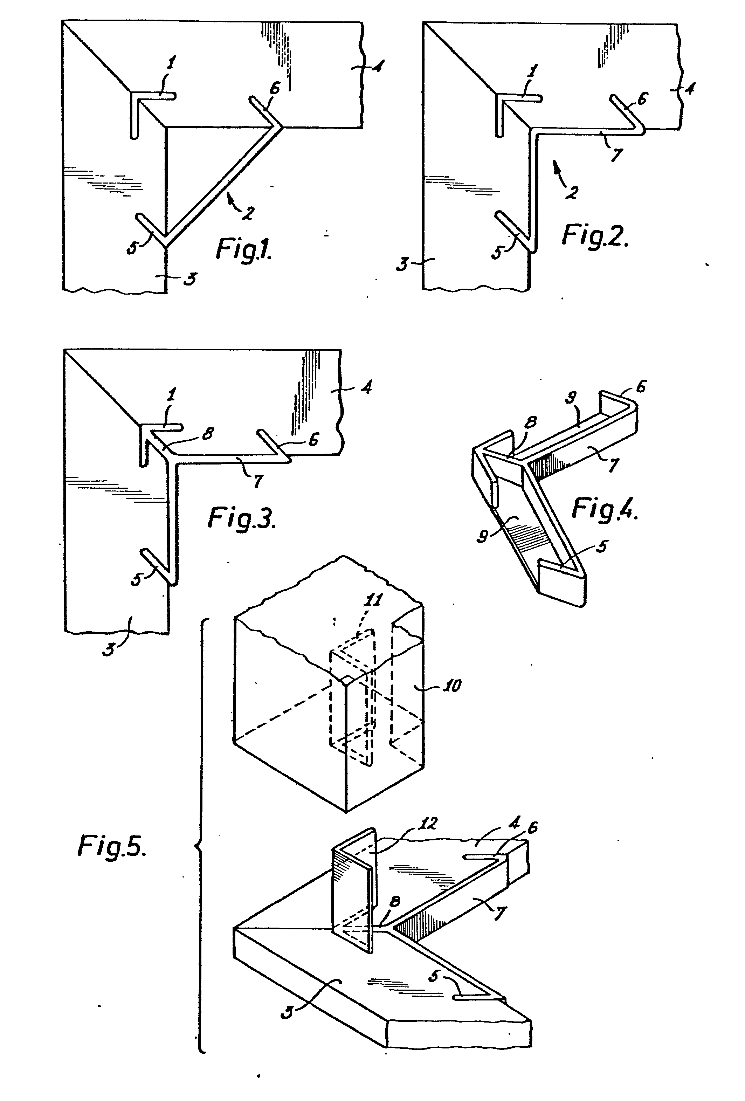

La Fig. 1 montre un dispositif d'assemblage en angle de deux traverses biseautées. Le terme "traverses" doit ici être pris au sens large et comprend notamment les planches.

Le dispositif d'assemblage comprend un élément d'assemblage 1 et un élément d'assemblage 2. Des traverses 3 et 4 devant être assemblées sont biseautées suivant un angle tel que la somme des angles des biseaux soit égale à l'angle que doivent former les traverses une fois assemblées. Les deux faces biseautées sont munies d'une encoche dans laquelle peuvent venir se loger les ailes de l'élément d'assemblage 1 en forme de cornière.

La forme de l'élément d'assemblage 1 et la disposition des encoches dans les faces biseautées sont telles que l'élément d'assemblage 1 peut être mis en place lorsque les deux traverses 3 et 4 sont juxtaposées par leur face biseautée. En fait, les dites encoches sont des rainures qui débouchent perpendiculairement par rapport au plan formé par les deux traverses 3 et 4 assemblées.

L'élément 1 peut ainsi être introduit par glissement dans la rainure dont les formes complémentaires correspondent au profil de l'élément 1 en forme de cornière. La disposition est évidemment telle que les arêtes aiguës formées par les extrémités biseautées des deux traverses 3 et 4 se touchent, l'angle extérieur formé par les deux traverses ne présente ainsi aucun décrochement.

L'élément 1 empêche tout glissement d'une surface biseautée par rapport à l'autre qui modifierait l'angle d'assemblage. Un déplacement vertical d'une des traverses par rapport au plan formé par les deux traverses est possible, mais ce déplacement n'affecte pas la valeur de l'angle d'assemblage.

Le second élément d'assemblage 2, prend appui sur chacune des traverses, immobilise celles-ci dans la position déterminée par le premier élément d'assemblage 1.

Les opérations d'usinage des traverses sont avantageusement réalisées sur machines-outils, particulièrement adaptées au travail en série. L'assemblage des traverses se limite à la mise en place des éléments d'assemblage 1 et 2, ce qui est très facile et rapide.

Les deux traverses sont ainsi immobilisées suivant un angle imposé par les conditions géométriques du biseautage.

Dans la forme particulière de réalisation qui est illustrée aux figures, l'élément d'assemblage 1 consiste en une équerre et chaque aile de l'équerre vient se loger dans une rainure réalisée dans chaque face biseautée suivant une direction perpendiculaire au plan formé par les deux traverses. Le deuxième élément d'assemblage 2 est constitué d'une bande dont les extrémités 5 et 6 sont rabattues. Chacune de ces extrémités vient se loger dans une rainure pratiquée dans chaque traverse 3 et 4 suivant une direction perpendiculaire au plan formé par ces deux traverses. L'élément d'assemblage 2 peut ainsi être introduit dans les rainures par glissement.

Pour parvenir à un blocage satisfaisant des deux traverses, il convient que l'extrémité rabattue de la bande 2 soit disposée suivant un plan sécant par rapport à l'aile de l'équerre 1 logée dans la même traverse.

Suivant la Fig. 2, l'élément d'assemblage 2, dont les extrémités 5 et 6 sont rabattues, est plié en forme d'équerre 7 pour épouser l'angle intérieur formé par les deux traverses.

La Fig. 3 montre un mode préférentiel de réalisation du dispositif d'assemblage. La bande 7 est, ici aussi, coudée pour épouser l'angle intérieur formé par les deux traverses 3 et 4. Une nervure 8 réunit l'équerre 1 et la bande 7. Le dispositif d'assemblage est ainsi formé d'une seule pièce et sa mise en place peut ainsi avantageusement être réalisée en une seule opération. Un fraisage superficiel aura été réalisé dans les deux faces biseautées, la nervure 8 venant se loger dans le logement ainsi réalisé.

La Fig. 4 représente un mode de réalisation avantageux du dispositif d'assemblage suivant l'invention. L'équerre 1 est reliée à la bande 7 par une nervure 8. La bande 7 est coudée en son point de raccordement avec la nervure 8 selon un angle identique à celui que doivent former les deux traverses une fois assemblées. Les extrémités 5 et 6 de la bande 7 sont rabattues. Chacune de ces extrémités 5 et 6 est disposée suivant un plan sécant par rapport au plan formé par l'aile de l'équerre 1 qui sera logée dans la même traverse. Toutes les parties constitutives du dispositif d'assemblage sont rapportées sur une semelle 9. Cette semelle 9 augmente avantageusement la rigidité de l'ensemble. Un fraisage superficiel correspondant à la forme de la semelle 9 peut être réalisé dans les chants des traverses 3 et 4. La semelle 9 peut ainsi venir se loger dans les chants des traverses évitant toute saillie.

Le dispositif d'assemblage conforme à l'invention peut être réalisé en toute matière appropriée, par exemple en un polymère synthétique tel qu'un polyester. Ses formes simples permettent de le réaliser aisément, notamment par moulage.

La Fig. 5 illustre un dispositif d'assemblage suivant l'invention adapté pour la fixation simultanée d'un montant. Les deux traverses 3 et 4 sont assemblées tel que décrit précédemment. L'équerre 1 fait saillie vers le haut par rapport à la face supérieure des traverses 3 et 4. Un montant 10 pourvu d'une mortaise 11 peut ainsi être emboîté sur la partie saillante 12 de l'élément d'assemblage 1.

Il est à noter que suivant une autre forme de réalisation, l'élément d'assemblage est analogue à celui représenté à la Fig. 5, mais comporte en outre un élément saillant disposé à la partie inférieure du dispositif d'assemblage. Un tel dispositif d'assemblage permet de solidariser entre eux les traverses 3 et 4 et également deux montants dont l'un est disposé au-dessus et l'autre en dessous des traverses 3 et 4.

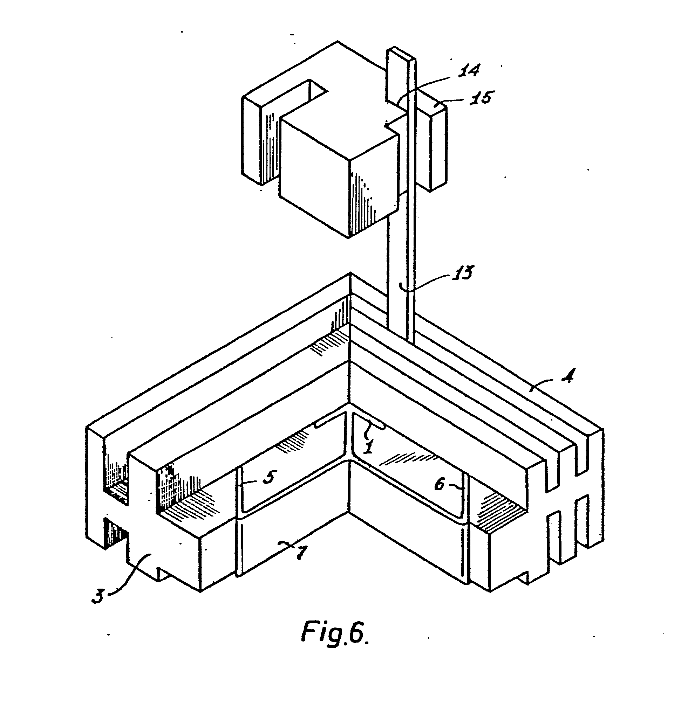

La Fig. 6 illustre un autre mode de fixation possible d'un montant. Les traverses 3 et 4 sont assemblées selon le dispositif d'assemblage précédemment décrit. Une clavette 13 est fixée verticalement sur une des deux traverses (3). Une encoche 14 correspondant à la partie saillante de la clavette 13 est réalisée dans l'extrémité inférieure d'un montant 15. Ce montant 15 vient ainsi s'emboîter sur la partie saillante de la clavette 13 et est ainsi immobilisé par rapport aux traverses 3 et 4.

La clavette 13 peut également traverser de part en part la traverse 3 ou 4, ce qui permet éventuellement à un deuxième montant, muni à son extrémité supérieure d'une mortaise de forme analogue au profil de la clavette 13 dans sa partie saillante inférieure, de venir s'emboîter sur celui-ci. La position de ce deuxième montant sera ainsi fixée par rapport aux deux traverses 3 et 4 et au premier montant 15.

Dans l'exemple choisi, la clavette 13 est constituée par un élément méplat. Il est fixé dans la traverse 3 par tout moyen approprié, par exemple emboîté dans une mortaise.

Le dispositif d'assemblage suivant l'invention peut être utilisé dans de nombreux domaines de la technique, notamment en ébénisterie ou menuiserie. A cet effet, la Fig. 7 donne un exemple de réalisation de meubles destinés à être vendus en pièces détachées et dont le montage peut être effectué par l'acheteur. Cet exemple d'utilisation ne doit pas être pris dans un sens restrictif.

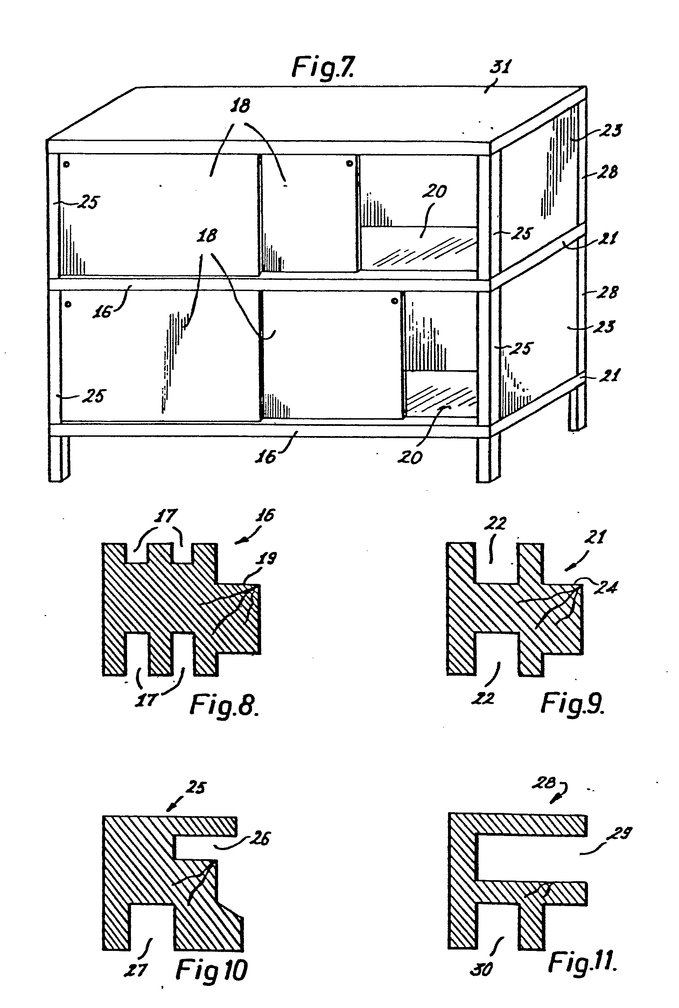

Sur sa face avant, le meuble présente des traverses frontales 16. Ces traverses frontales 16, dont la section est représentée à la Fig. 8, présentent des rainures 17 dans lesquelles coulissent des portes 18. Une battée 19 sert de support pour les tablettes inférieures 20.

Chaque traverse latérale 21 est assemblée à une traverse frontale 16 par un dispositif analogue à celui représenté à la Fig. 3. La traverse latérale 21 dont la section est représentée à la Fig. 9, est munie de rainures 22 dans lesquelles viennent se loger les extrémités inférieure et/ou supérieure des faces latérales 23 du meuble.

Les traverses latérales 21 sont munies d'une battée 24 qui sert de support aux tablettes 20.

Les montants frontaux 25 sont assemblés aux traverses frontale 16 et latérale 21 d'une façon similaire à celle représentée en Fig. 6. La section transversale du montant frontal 25 est montrée en Fig. 10. Une mortaise 26 reçoit la clavette 13 pour l'assemblage vertical (voir Fig. 6), et une rainure 27 sert au logement de la paroi latérale 23 du meuble.

Les traverses dorsales (non visibles sur le dessin) sont assemblées aux traverses latérales 21 par le dispositif montré en Fig. 3. Les traverses dorsales dont la section est montrée en Fig. 9 disposent d'une rainure 22 servant aux logements des panneaux dorsaux et d'une battée 24 servant aux supports des tablettes 20.

Les montants dorsaux 28 viennent se glisser entre les parois dorsales (non visibles sur le dessin) et les parois latérales 23. Ces montants dorsaux 28, dont la section est montrée en Fig. 11, présentent une rainure 29 destinée au logement de la paroi latérale 23 et une rainure 30 destinée au logement de la paroi dorsale.

Une tablette 31 est disposée à la partie supérieure du meuble par tout moyen approprié, par exemple par emboîtement sur les parois latérales et dorsale du meuble. Deux rainures sont pratiquées dans cette tablette 31 afin de permettre le coulissement des portes 18.

Lors de la vente, les différentes pièces constitutives du meuble peuvent être emballées sous un faible volume, ce qui facilite le transport.

Bien entendu, l'invention n'est pas limitée aux formes d'exécution qui ont été décrites et représentées à titre d'exemples non limitatifs et de nombreuses modifications peuvent y être apportées sans sortir de son cadre.

REVENDICATIONS

1.- Dispositif d'assemblage en angle de deux traverses biseautées en bout (3 et 4), caractérisé en ce qu'il comprend un premier élément d'assemblage (1) pouvant être engagé dans un logement prévu à cet effet dans chacune des deux traverses (3 et 4), de manière à déterminer la position relative de ces traverses juxtaposées par leurs faces biseautées, et un second élément d'assemblage (2) pouvant être disposé à l'intérieur de l'angle formé par les deux traverses (3 et 4) et présentant des moyens pour maintenir ces traverses dans la position déterminée par le dit premier élément d'assemblage (1).

2.- Dispositif d'assemblage suivant la revendication 1, caractérisé en ce que le dit premier élément d'assemblage est constitué d'une équerre (1) et que le second élément d'assemblage est constitué d'une bande (2) dont les extrémités rabattues (5 et 6) viennent se loger dans une rainure prévue à cet effet dans chacune des traverses (3 et 4).

3.- Dispositif d'assemblage suivant la revendication 2, caractérisé en ce que chaque extrémité rabattue (5 et 6) de la dite bande (2) est disposée suivant un plan sécant par rapport au plan formé par l'aile de l'équerre logée dans la même traverse.

4.- Dispositif d'assemblage suivant l'une quelconque des revendications 2 et 3, caractérisé en ce que la dite bande (2) est coudée en forme d'équerre (7) de manière à épouser l'angle intérieur formé par les traverses (3 et 4).

5.- Dispositif d'assemblage suivant l'une quelconque des revendications précédentes, caractérisé en ce qu'il comprend, en outre, une nervure (8) reliant entre eux les deux éléments d'assemblage (1 et 2) constituant le dispositif d'assemblage, de manière à ce que ce dernier ne forme qu'une seule pièce.

6.- Dispositif d'assemblage suivant l'une quelconque des revendications précédentes, caractérisé en ce que les différents éléments (1, 2 et 8) constituant le dispositif d'assemblage sont rapportés sur une semelle (9).

7.- Dispositif d'assemblage suivant l'une quelconque des revendications précédentes, caractérisé en ce que le dit premier élément d'assemblage (1) fait saillie perpendiculairement au plan formé par les traverses (3 et 4), et est apte à recevoir un montant (10) muni d'une mortaise (11) s'emboîtant sur la partie saillante (12) de l'élément d'assemblage (1).

8.- Dispositif d'assemblage suivant l'une quelconque des revendications précédentes, caractérisé en ce qu'il est associé à une clavette (13) dont une des extrémités est logée dans l'une des traverses (3 ou 4) de l'assemblage, l'autre extrémité venant se loger dans l'extrémité d'un montant (14) dont la position est ainsi fixée par rapport aux deux traverses (3 et 4).

9.- Meuble démontable assemblé à l'aide du dispositif d'assemblage suivant l'une quelconque des revendications précédentes.

0048236

Fig.1.

Fig.2.

Fig.3.

Fig.4.

Fig.5.

Fig.6.

Fig.7.

Fig.8.

Fig.9.

Fig 10

Fig.11.

**0048236**
Numero de la demande

**RAPPORT DE RECHERCHE EUROPEENNE**

Office européen
des brevets

EP 81 87 0036

## DOCUMENTS CONSIDERES COMME PERTINENTS

| Categorie | Citation du document avec indication. en cas de besoin, des parties pertinentes | Revendication concernée |
|---|---|---|
| | <u>DE - B - 1 193 217</u> (SCHIEK)<br>* Colonne 3, lignes 21-44; figure 1 * | 1-3,5 |
| | -- | |
| | <u>BE - A - 521 961</u> (DE CARNE)<br>* En totalité * | 1 |
| | -- | |
| | <u>FR - A - 963 902</u> (THILL)<br>* Page 1, lignes 48-62; figure 6 * | 1,4 |
| | -- | |
| | <u>CH - A - 239 726</u> (KOBERLE)<br>* Page 2, lignes 54-59; figure 15 * | 7,8 |
| | -- | |
| | <u>FR - A - 2 308 820</u> (SOCIETE TOSCA-<br>NA SEMILAVORATI)<br>* Page 6, lignes 8-20; figures 17,18 * | 1,6 |
| | ---- | |

**CLASSEMENT DE LA DEMANDE (Int Cl )**

F 16 B 12/24
12/46

**DOMAINES TECHNIQUES RECHERCHES (Int Cl )**

F 16 B
A 47 B
E 06 B

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cite pour d'autres raisons

&: membre de la même famille, document correspondant

Le present rapport de recherche a ete etabli pour toutes les revendications

| Lieu de la recherche | Date d achèvement de la recherche | Examinateur |
|---|---|---|
| La Haye | 19-10-1981 | SCHMITTER |

OEB Form 1503.1  06.78